# EUROPEAN PATENT APPLICATION

(11) **EP 1 429 548 A2**
(43) Date of publication of application: **16.06.2004**
(21) Application number: 03027735.4
(22) Date of filing: 02.12.2003
(51) Int. Cl.: H04N 5/44

(54) **Program receiver**

(30) Priority: 11.12.2002 JP 2002358949
(71) Applicant: ORION ELECTRIC CO., Ltd., Takefu-City, Fukui 915 (JP)
(72) Inventor: Mizushima, Yoshinori, Takefu-shi Fukui-ken (JP); Horita, Hiroyuki, Takefu-shi (JP)
(74) Representative: Kirschner, Klaus Dieter, Dipl.-Phys.

(57) **Abstract**

While viewing a program, a viewer can check the other program at arbitrary timing. While a program on a channel received by a first tuner 1 is being output, when a commercial starte or a start signal is input from an operation portion 6, an output of the program is changed to that of a program received by a second tuner. The viewer can select either outputting the program on the channel designated by the second tuner 2 or sequentially changing channels received by the second tuner 2 and sequentially outputting different programs according to a viewer's desire. When the commercial is over or an end signal is input from the operation portion 6, the output is changed to that of the program received by the first tuner 1 and the original program is output.

## Description

### BACKGROUND OF THE INVENTION

### Field of the Invention

The present invention relates to a program receiver for use in a television set or a videotape recorder in which a tuner is installed.

### Description of the Related Art

While watching a program on a viewer's desired channel by a program receiver such as a television set, a viewer often feels inclined to view a program on the other channel and changes the present channel to the other channel when a commercial Starts. In relation to this, Patent Documents 1 and 2 disclose the conventional art for automatically changing channels without viewer's labor.

According to Japanese Patent Application Laid-Open No. 6-85617 (paragraph 0006), if a commercial starts while the viewer receives and displays a desired program, the program receiver detects a change of a voice mode, sequentially selects preset channels, and receives and displays the selected preset channels each for a predetermined time. If completing with the reception of all the preset channels, the receiver returns to the original channel.

According to Japanese Patent Application Laid-Open No. 5-316440 (paragraphs 0014 and 0019), the program receiver detects a commercial break by a change from a sound-multiplex broadcast to a stereo or monaural broadcast, sequentially changes the channels, and records images. The receiver then displays the recorded images on a sub-screen. Alternatively, if the receiver detects a commercial break, the receiver changes the present channel to a specific channel. When a commercial is over, the receiver returns to the original channel.

According to the conventional art, however, the viewer can view only the programs on the preset channels and may possibly miss some programs. The receiver returns the channel to the original channel after receiving all the preset channels. Due to this, when the receiver returns to the original channel, it sometimes occurs that the commercial has been finished and the original program is already broadcast. As a result, the viewer may disadvantageously miss a part of the original program. If the received images are displayed on the sub-screen, the viewer can view only the programs on the restricted channels. Further, a memory and a video processing circuit are required to record the images. This disadvantageously complicates processings of a microcomputer and pushes up cost. As can be seen, each conventional art has some disadvantages.

Further, when the viewer is receiving a program without commercials, the conventional program receiver cannot automatically change the prasent channel to the other channel and the viewer should disadvantageously perform a channel switching processing. While the viewer is mainly viewing one program, the viewer feels inclined to view the other specific program during a commercial break or feels inclined to know what the other programs now broadcast are. Therefore, viewer's purposes of checking the other programs often vary from time to time. Nevertheless, a program receiver having a function of checking the other program according to the viewer's purpose has nor been conventionally proposed.

### SUMMARY OF THE INVENTION

The present invention has been achieved to solve these disadvantages. It is an object of the present invention to provide a program receiver capable of checking the other program in response to a viewer's desire.

According to one aspect of the present invention, there is provided a program receiver comprising: a plurality of tuners each receiving a program; first output means for outputting the program received by the first tuner; second output means for outputting a program received by a tuner other than the first tuner; and switching means for changing an output of the first output means to an output of the second output means in response to a start signal input from an outside, and for changing the output of the second output means to the output of the first output means in response to an end signal input from the outside after passage of a predetermined time, wherein the second output means outputs the program received by the first tuner or sequentially outputs different programs received by the tuner other than the first tuner.

According to another aspect of the present invention, there is provided a program receiver comprising: a tuner which receives a program; first output means for outputting the program on one main channel; second output means for outputting the program on a channel other than the main channel; and switching means for changing an output of the first output means to an output of the second output means in response to a start signal input from an outside, and for changing the output of the second output means to the output of the first output means in response to an end signal input from the outside after passage of a predetermined time, wherein the second output means outputs the program on one channel or sequentially outputs different programs on a plurality of channels, respectively.

While the first output means outputs the program, the output of the first output means is changed to that of the second output means at a timing at which the start signal is input. When the end signal is input, the program is returned to the original program. Therefore, it is possible to output the other programs according to a viewer's desire and check contents of the programs. After the viewer effects the viewer's purpose, the other program can be easily returned to the original program.

If the tuner is changed at this moment, the program can be checked according to the viewer's desire. Namely, if there is another interesting program, the channel for the program is designated and only the specific program is output. If the viewer desires to know what the other programs are like, the channels are sequentially changed and different programs are sequentially output. It is thus possible to select the output of one program or that of a plurality of programs and meet the viewer's desire.

If different programs on a plurality of channels are sequentially output, the programs on the plurality of channels are sequentially output within a predetermined time. When the output is changed next time, the programs on the channels starting at the channel next to the last channel in the previous search are sequentially output. If there are many channels, programs on all the channels cannot be received and output only by one output change. Therefore, the programs on all the channels can be received by receiving them at different output changes.

The start signal and the end signal are generated in response to a start and an end of a commercial broadcast halfway along the program, respectively. The commercial is received, and the start of the commercial and the end of the commercial after the passage of a predetermined time are detected, whereby the start signal and the end signal are generated. That is, the signal received when the commercial starts and input from the outside corresponds to the start signal. The signal received when the commercial is over corresponds to the end signal.

The start signal and end signal may be generated by a viewer's input operation. Namely, the signal generated by the viewer's operation of the key on the operation portion at an arbitrary timing corresponds to the start key or the end key. The output of the program may be changed to the output of the other program for a certain time since the input of the start signal. In this case, the end signal is generated after the passage of the certain time.

The program receiver includes continuation means for continuously outputting the program while the second output means is outputting the program. By providing this continuation means, if the viewer desires to continuously view the other program while checking the other program, the return of the output of the channel to that of the original channel is prohibited even when the end signal is input in response to the end of the commercial or the like. Therefore, the present program can be continuously output.

### BRIEF DESCRIPTION OF THE DRAWINGS

Fig. 1 is a schematic block diagram of a videotape recorder in which a program receiver in one embodiment of the present invention is installed;
Fig. 2 illustrates a menu setting screen;
Fig. 3 is a flow chart for a channel switchover operation; and
Fig. 4 illustrates a switch time setting screen.

### DETAILED DESCRIPTION OF THE PREFERRED EMBODIMENTS

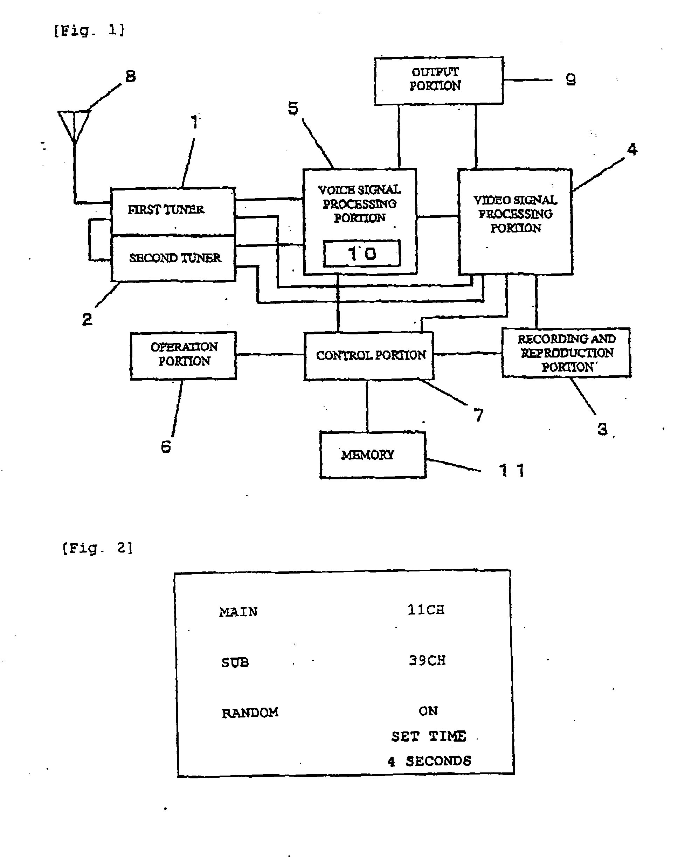

Fig. 1 illustrates a proqram receiver in one embodiment of the present invention. The program receiver in this embodiment, which is installed in a video tape recorder, includes a first tuner 1, a second tuner 2, a recording and reproduction portion 3 which records video and voice signals of a received program on a recording medium such as a hard disk, a DVD, or a video tape and which reproduces the video and voice signals from the recording medium, a video signal processing portion 4 consisting of a Y/CIC for processing the video signals, a voice signal processing portion 5 such as a Hi-Fi IC or a stereo IC which processes the voice signals, an operation portion 6 such as a remote controller for various settings, channel selection, etc., and a control portion 7 which consists of a microcomputer and which drives and controls the other constituent elements of the receiver.

The operation portion 6 selects a channel. The first and second tuners 1 and 2 receive terrestrial broadcast and satellite broadcast signals on the selected channel through an antenna 8 or receive signals from a cable network. The video and voice signals are output to the recording and reproduction portion 4 through the video signal processing portion 4 and the recording and reproduction portion 3 carries out program recording. The video signal from the video signal processing portion 3 and the voice signal from the voice signal processing portion 5 are output to an output portion 9 such as a television set or a monitor. The viewer can view and listen to the received or recorded program on a screen of the output portion 9 and through a loudspeaker.

The voice signal processing portion 5 includes a voice signal detection circuit 10 which detects the type of the voice signal output from the tuners 1 and 2, a stereo signal, a monaural signal or a sound-multiplex signal. The voice signal detection circuit 10 outputs a detection signal to the control portion 7 when the types of the voice signal change. It is thereby possible to detect whether the program or a commercial is broadcast. The detection of the commercial is not limited to this method and a well-known technique can be used for the detection.

The control portion 7 includes a first output means which outputs the received program on the channel selected by the first tuner 1 and set as a main channel, a second output means which outputs the received program on the channel selected by the second tuner 2 and set as a sub channel, a switching means which changes the main channel program to the sub-channel program when a commercial starts on the main channel and which changes the sub-channel program to the main channel program when the commercial is over, and a continuation means which continuously outputs the Sub-channel program without changing the sub-channel program to the other program while the sub-channel program is being output. The second output means can select one of sub designation for designating one channel and outputting a program on the designated channel and random designation for outputting a plurality of programs while sequentially selecting channels.

The control portion 7 includes a menu by which the viewer can check programs on the other channels during a commercial break while the viewer views the main channel program. As shown in Fig. 2, the main channel is selected first by the first tuner 1. If the second output means selects the sub designation, the sub-channel is selected by the second tuner 2 and a random designation setting is turned off. If the second output means selects the random designation, the random designation setting is turned on and set time is input. The menu is thus set.

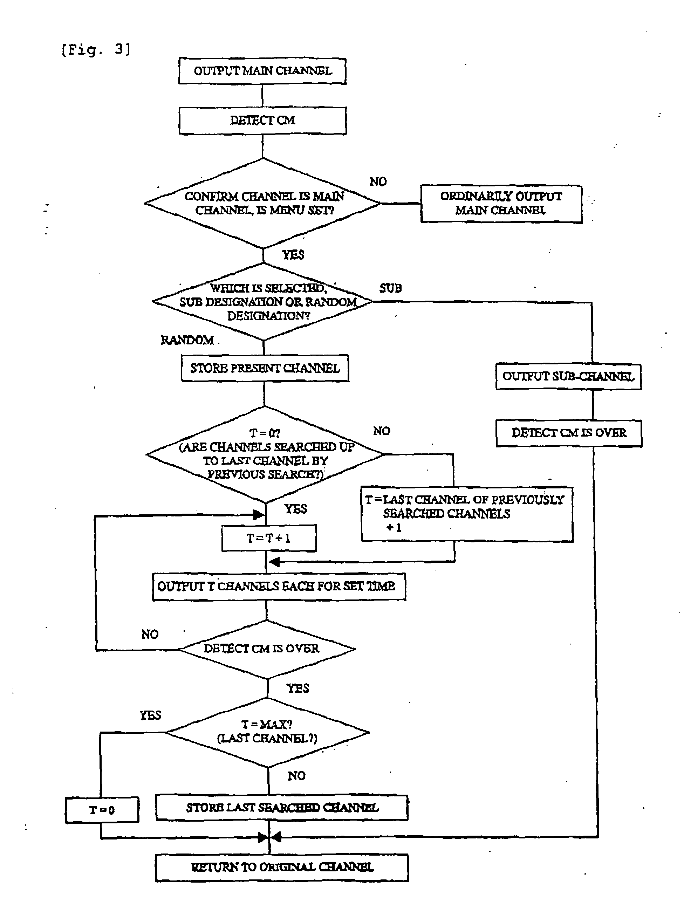

The first output means outputs the main channel program to the output portion 9, so that the viewer can view the desired program. As shown in Fig. 3, when a commercial starts, the voice signal detection circuit 10 detects the start of the commercial and inputs the detection signal to the control portion 7. The control portion 7 recognizes this detection signal as a start signal, confirms that the present channel is the main channel, and checks whether the menu is set. If the menu is not set, the output portion 10 outputs the main channel program and the viewer can ordinarily view the program. If the menu is set, the control portion 7 checks which designation is selected, the sub designation or the random designation.

If the sub designation is selected, tha switching means changes the output of the first output means to that of the second output means. The sub-channel program is output from the output portion 9. At this moment, by notifying the viewer that the present channel is the sub-channel, the viewer does not feel embarrassed. While the sub-channel program is output, the main channel program is monitored. If the voice signal detection circuit 10 detects the end of the commercial on the main channel, the voice signal detection circuit 10 inputs the detection signal to the control portion 7. The control portion 7 recognizes this detection signal as an end signal and the switching means changes the output of the second output means to that of the first output means. The original, main channel program is thus broadcast again.

If the random designation is selected, the switching means changes the output of the first output means to that of the second output means. At this moment, the channel received by the first tuner 1 is stored in the memory 11. The second output means sequentially searches the channels received by the second tuner 2 from channel 1 to the following, and outputs received programs each for the set time, e.g., four seconds. The received programs are output to the output portion 9 and sequentially broadcast. In the channel search, the second output means searches only preset channels. By automatically Skipping non-preset channels without searching them, it is possible to receive as-many programs as possible in short time. Further, the second output means skips the channels received by the first tuner 1.

If the voice signal detection circuit 10 detects the end of the commercial on the main channel, the control portion 7 recognizes the detection signal input from the circuit 10 as the end signal and the switching means changes the output of the second output means to that of the first output means. The original, main channel program is broadcast again. At this moment, the last received channel is stored in the memory 11 so as to grasp the channels searched for the second tuner 2. If the channel search is done up to the last channel, the channel stored in the memory 11 is set as channel 0.

When a commercial starts again while the main channel program is output, the switching means changes the output of the main channel to that of the sub-channel. The last channel searched previously during the previous commercial break is read from the memory 11 and a search starts at the channel next to this last channel. For example, if the channel 1 to the channel 7 are searched in the previous search and the receiver returns the channel 7 to the original channel, the search starts at channel 8 this time and received programs are sequentially output. By doing so, it is possible to Check all the receivable channel programs, which is advantageous for the presence of many channels such as cable television broadcasting. Alternatively, instead of starting the search at the next channel to the last channel, the search may start at the first channel whenever the output is changed.

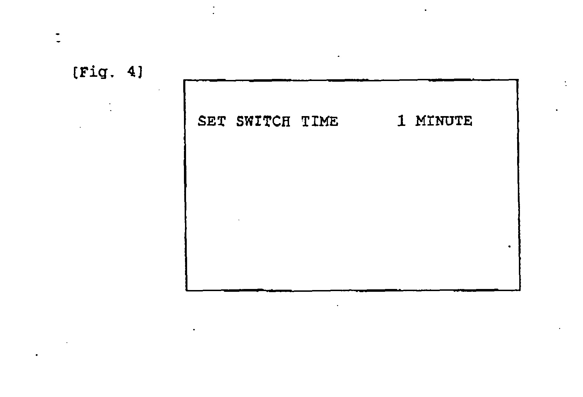

In this embodiment, the start signal and the end signal are generated based on the start and end of the commercial, respectively. Alternatively, the start signal and the end signal may be generated at arbitrary timings. Namely, while the program is being broadcast, if the viewer operates a key on the operation portion 6 when the viewer so desires, the switch time setting screen is displayed as shown in Fig. 4. On this screen, the viewer inputs desired time and turns on a definition key. If so, the control portion 7 recognizes that the start signal is input and changes the main channel to the sub channel. At this time, the sub-channel program is output according to either the sub designation or the random designation. When the set switching time passed, the control portion 7 recognizes time-up as the end signal and returns the sub channel to the original channel.

As can be seen, it is possible to arbitrarily change the sub-channel program to or from the main channel program. Accordingly, even if the viewer receives the program without commercials, the program can be changed to the other program. It is, therefore, possible to check the other programs the viewer takes an interest in at arbitrary timings in response to the viewer's desires.

Further, while the sub-channel program is being checked, the viewer operates a specific key on the control portion 6, e.g., a Channel switch key, the definition key, or a dedicated key, the continuation means of the control portion 7 stops the channel search and continuously outputs the program that is currently being output. As a result, if the viewer discovers an interesting program while checking the other programs, the viewer can simply continue to view the present program without requesting the viewer to carry out any complicated operation.

Needless to say, the present invention is not limited to this embodiment and various changes and modifications can be made to this embodiment within the scope of the invention. If the random designation is selected, the channels selected at random may be sequentially output instead of sequentially outputting the channels in an ascending order. If the program switching set time is short, only the mute video signal may be output. If voices change as the output programs sequentially change, the changing voices may possibly offend the ear However, by muting the voices, it is possible to prevent the viewer from feeling uncomfortable.

Further, the start signal may be generated when a specific screen appears during the broadcasting of the program, e.g., a screen for notifying the end of the program appears. The sub-channel program is output only for certain time. This can save time for searching the next interesting program when one program is over. Besides, the end signal may be generated by the key operation on the operation portion.

The program receiver may include two or more tuners. If the random designation is selected, the receiver sequentially changes the tuners and output different programs. The program receiver may include only one tuner. In this case, the channel is changed to the other channel in response to the input of the start signal and the other program is output. It is assumed that this tuner has a function of receiving a plurality of channels simultaneously. This function enables the viewer to monitor the main channel program even if the main channel is changed to the other channel when the commercial starts on the main channel. If the end of the commercial is detected, the channel can be automatically returned to the original channel.

As is obvious from the above, according to the present invention, the program on one channel other than the main channel or those on a plurality of channels other than the main channel can be checked in response to the viewer's desire or purpose. Further, it is also possible to change the present channel to the other channel in response to the input of the start signal or the end signal. Due to this, even if the viewer views the program without commercials, the viewer can easily check the other programs. Accordingly, the present invention can realize the program receiver capable of conveniently, automatically selecting channels. If this program receiver is installed in a television set, a video tape recorder or a personal computer, the function of the device can be improved and added value can be enhanced.

## Claims

1. A program receiver comprising:
a plurality of tuners each receiving a program;
first output means for outputting the program received by the first tuner;
second output means for outputting a program received by a tuner other than the first tuner; and
switching means for changing an output of the first output means to an output of the second output means in response to a start signal input from an outside, and for changing the output of the second output means to the output of the first output means in response to an end signal input from the outside after passage of a predetermined time, wherein
the second output means outputs the program received by the first tuner or sequentially outputs different programs received by the tuner other than the first tuner.

2. A program receiver comprising:
a tuner which receives a program;
first output means for outputting the program on one main channel;
second output means for outputting the program on a channel other than the main channel; and
switching means for changing an output of the first output means to an output of the second output means in response to a start signal input from an outside, and for changing the output of the second output means to the output of the first output means in response to an end signal input from the outside after passage of a predetermined.time, wherein
the second output means outputs the program on one channel or sequentially outputs different programs on a plurality of channels, respectively.

3. The program receiver according to claim 1 or 2, comprising continuation means for continuously outputting the program while the second output means is outputting the program.

4. The program receiver according to claim 1 or 2, wherein
the second output means sequentially outputs the programs on a plurality of channels within a predetermined time, and sequentially outputs the programs on the channels starting at the last channel when the output of the first output means is changed to the output of the second output means next time.

5. The program receiver according to any one of claims 1 to 4, wherein
the start signal and the end signal are generated in response to a start and an end of a commercial broadcast halfway along the program, respectively.

6. The program receiver according to any one of claims 1 to 4, wherein
the start signal is generated by a viewer's input operation, and the end signal is generated after the passage of a predetermined time.
